# EUROPEAN PATENT APPLICATION

(11) **EP 2 565 082 A1**
(43) Date of publication of application: **06.03.2013**
(21) Application number: 11843978.5
(22) Date of filing: 18.10.2011
(51) Int. Cl.: B60Q 5/00, B60R 11/02

(54) **VEHICLE TRAVEL WARNING DEVICE**

(30) Priority: 26.11.2010 JP 2010263115
(71) Applicant: JVC Kenwood Corporation, Yokohama-shi, Kanagawa 221-0022 (JP)
(72) Inventor: MUROYA Tsuyoshi, Yokohama-shi Kanagawa 221-0022 (JP)
(74) Representative: Wimmer, Hubert
(86) International application number: PCT/JP2011/073892
(87) International publication number: WO 2012/070334

(57) **Abstract**

[Problem]

[Solving Means]

A vehicle running warning device includes: a fixed sound source signal generator configured to generate a fixed sound source signal with a certain frequency distribution; a variable sound source signal generator configured to generate a variable sound source signal with a frequency distribution having a peak frequency corresponding to each set; a sound-emitting controller configured to determine an acceleration segment of a vehicle based on vehicle speed information obtained from the vehicle to which the controller is mounted, and set the peak frequency based on the determined acceleration segment and the latest vehicle speed information; and a sound source signal adder configured to add to the fixed sound source signal a variable sound source signal in which the peak frequency is set, and output, and emits a vehicle running warning sound in consideration of a speed and an acceleration of the vehicle.

## Description

### [Technical Field]

The present invention relates to a vehicle running warning device that is mounted to a low-noise vehicle and causes a pedestrian to sense a state where a vehicle is running.

### [Background Art]

A motor running vehicle such as a hybrid vehicle or an electric vehicle has a very small running sound in comparison with a conventional engine vehicle, and especially is almost silent during low-speed running. Because of this, a problem that a pedestrian is unaware of an approach of vehicle has been pointed out.

Thus, it has been proposed that a pedestrian is caused to sense an approach of vehicle by mounting to a motor running vehicle a vehicle running warning device that emits a sound, such as a recorded or synthesized engine sound or a tire noise, for invoking a state where a vehicle is running, and emitting the sound during low-speed running

Regarding such a vehicle running warning device, it has been proposed to start emitting a simulated tire noise notification sound to the outside of vehicle at the time when the vehicle starts moving, reduce a sound pressure of the simulated tire noise notification sound as a vehicle speed increases, and control tone at the time when the vehicle has a certain vehicle speed and the notification sound is changed to a running auxiliary sound. It has been further proposed to emit a simulated idling notification sound during idling. Also, Patent Literature 1 describes generating different acousmato depending on a vehicle speed and generating acousmato having a high frequency component at the time of high speed.

### [Citation List]

### [Patent Literature]

### [PTL 1]

Japanese Patent Application Laid-Open Publication No. 2004-136831

### [Summary of Invention]

### [Technical Problem]

In general, by a running sound of a vehicle, a pedestrian empirically determines a running state of the vehicle in addition to an approach of the vehicle. Thus, it is possible to provide meaningful information to a pedestrian by changing a pitch of a sound to be generated depending on a vehicle speed.

Invoking as to how a speed changes, that is, an acceleration, in addition to the vehicle speed is significant information for a pedestrian to sense a danger

The present invention has an object to provide a vehicle running warning device that emits a vehicle running notification sound in consideration of an acceleration in addition to a vehicle speed.

### [Solution to Problem]

In order to resolve the above-described problem, a vehicle running warning device of the present invention includes: a fixed sound source signal generator configured to generate a fixed sound source signal with a certain frequency distribution; a variable sound source signal generator configured to generate a variable sound source signal with a frequency distribution having a peak frequency corresponding to each set; a sound-emitting controller configured to determine an acceleration segment of a vehicle based on vehicle speed information obtained from the vehicle to which the controller is mounted, and set the peak frequency based on the determined acceleration segment and the latest vehicle speed information; and a sound source signal adder configured to add to the fixed sound source signal a variable sound source signal in which the peak frequency is set, and output.

Here, the sound-emitting controller may determine an acceleration segment of the vehicle based on a vehicle speed after elapse of a predetermined time from the time when the vehicle starts moving.

Further, the sound-emitting controller may set the peak frequency according to a rule which is defined such that as a vehicle speed becomes higher, the peak frequency increases step-by-step by each acceleration segment until a certain reference speed.

At this time, the rule may be defined such that as an acceleration segment has a higher acceleration, the number of steps of the peak frequency decreases.

Also, it is desirable that an output level of a peak frequency of the variable sound source signal is larger than an output level of the fixed sound source signal.

Also, the sound-emitting controller may determine an acceleration segment every time when the vehicle starts moving after stopping.

### [Advantageous Effects of Invention]

According to the present invention, there is provided the vehicle running warning device that emits a vehicle running notification sound in consideration of an acceleration in addition to a vehicle speed.

### [Brief Description of Drawings]

[FIG. 1]
   It is a block diagram that illustrates a configuration of a vehicle running warning device.
[FIG. 2]
   It is a diagram that schematically illustrates the vehicle running warning device mounted in a vehicle.
[FIG. 3]
   It is a diagram that illustrates a frequency distribution of a sound source signal generated by a fixed sound source signal generator.
[FIG. 4]
   It is a diagram that illustrates a frequency distribution of a sound source signal generated by a variable sound source signal generator.
[FIG. 5]
It is a diagram that illustrates a relation between a speed after elapse of two seconds from the time when a vehicle starts moving and an acceleration segment.
[FIG. 6]
   It is a diagram that illustrates a relation between a speed in each acceleration segment and a peak frequency of a variable sound source signal.
[FIG. 7]
   It is a diagram that illustrates a frequency distribution of a signal resulting from adding a variable sound source signal to a fixed sound source signal.
[FIG. 8]
   It is a flowchart that illustrates operation of the vehicle running warning device according to the present embodiment.
[FIG. 9]
   It is a diagram that illustrates a relation between a speed and a peak frequency of a variable sound source signal.

### [Description of Embodiments]

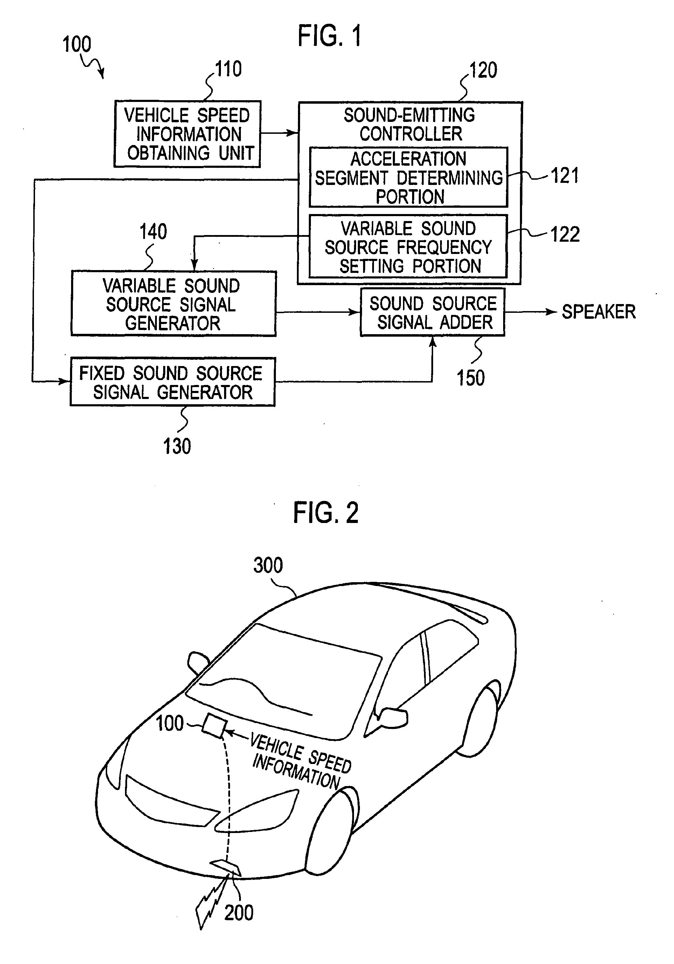

An exemplary embodiment of the present invention will be described in detail with reference to accompanying drawings. FIG. 1 is a block diagram that illustrates a configuration of a vehicle running warning device according to the present embodiment. As shown in the diagram, the vehicle running warning device 100 includes a vehicle speed information obtaining unit 110, a sound-emitting controller 120, a fixed sound source signal generator 130, a variable sound source signal generator 140 and a sound source signal adder 150. For example, the vehicle running warning device 100 is configured using an information processing device which includes a CPU, a memory, an interface and the like.

It is noted that the vehicle running warning device 100 is a device that is mounted to a vehicle 300 as shown in FIG. 2, obtains vehicle speed information from the vehicle 300, and warns a pedestrian of a state that a vehicle is running by outputting a sound signal to a speaker 200 provided in the front of the vehicle 300 to emit a sound. The vehicle 300 is a low-noise vehicle provided with a motor such as a hybrid vehicle or an electric vehicle as a driving source.

In FIG. 1, the vehicle speed information obtaining unit 110 obtains vehicle speed information of the vehicle 300. The vehicle speed information may be obtained by measuring a vehicle speed signal which is a pulse signal proportional to the number of rotations of axle of the vehicle 300, or by inputting vehicle speed information measured by the vehicle 300 based on a vehicle speed signal. Vehicle speed information is continually obtained, and then output to the sound-emitting controller 120.

For example, the fixed sound source signal generator 130 generates a sound source signal for emitting a sound such as a simulated engine sound. For example, the sound source signal can be obtained by sampling or recording an engine sound of 2000 rpm of an engine vehicle. A format of the sound source signal may be an analog format or a digital format. Also, it may be a running sound, a tire noise or the like without being limited to a sound source signal wave or a simulated engine sound generated by the fixed sound source signal generator 130.

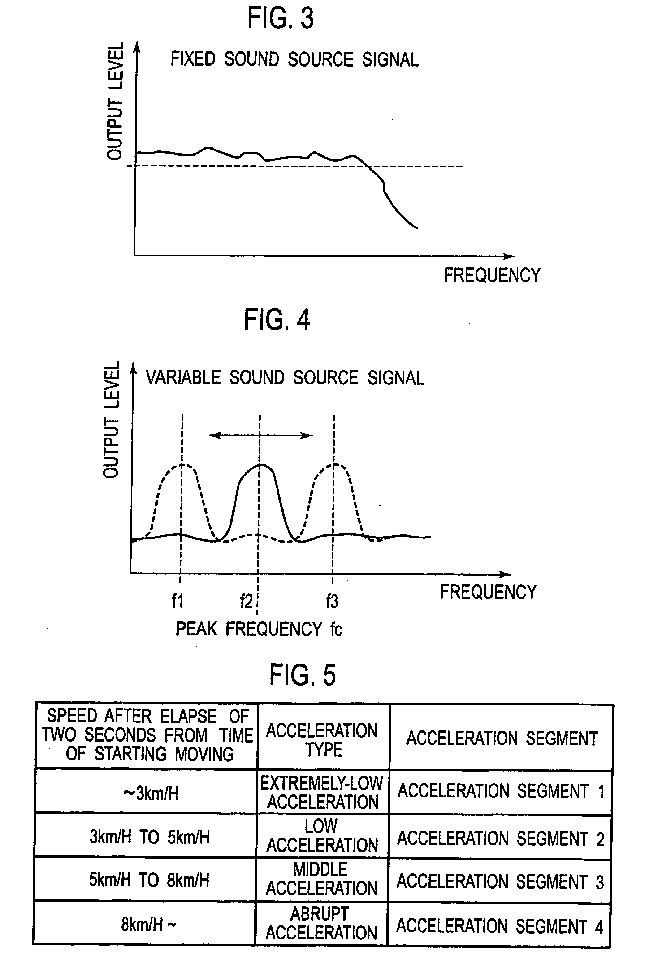

FIG. 3 shows a frequency distribution of a sound source signal generated by the fixed sound source signal generator 130. As shown in the diagram, a sound source signal generated by the fixed sound source signal generator 130 has a frequency distribution in which frequencies are uniformly distributed within a certain frequency band. A general form of the frequency distribution is not variable and is fixed. Needless to say, it may include a fluctuation because it simulates an engine sound.

The variable sound source signal generator 140 outputs a sound source signal with a frequency distribution in which a peak frequency fc is included, as shown in FIG. 4. An output level (sound pressure) of the peak frequency fc is larger than an output level (sound pressure) of the fixed sound source signal output by the fixed sound source signal generator 130. The peak frequency fc is variable and may be set within a range between 200 Hz to 3 kHz, for example. In the example of the diagram, the state where the peak frequency f changes to f1, f2 and f3 in this order is shown. Thus, a sound source signal output by the variable sound source signal generator 140 may have a plurality of peak frequencies. In this case, the plurality of peak frequencies changes in conjunction with one another. It is desirable that there is a harmonic component of the peak frequency f as little as possible.

The sound-emitting controller 120 is a functional unit that controls emitting of a warning sound in the vehicle running warning device 100. In the present embodiment, a warning sound is emitted when a speed of the vehicle 300 is equal to or less than a certain speed. For example, the certain speed is 20 km/h. Even if it is a low-noise vehicle, a tire noise, a wind noise and the like increases after the speed reaches a certain level of speed, which allows a pedestrian to easily sense it without emitting a vehicle running warning sound. Due to this, by carrying out emitting of a warning sound when the speed is equal to or less than the certain speed such as 20 km/h, calling necessary attention to a pedestrian is sufficiently made and an unnecessary warning sound need not be emitted.

The sound-emitting controller 120 includes an acceleration segment determining portion 121 and a variable sound source frequency setting portion 122. The acceleration segment determining portion 121 measures an acceleration of the vehicle 300 based on a speed of the vehicle 300 obtained by the vehicle speed information obtaining unit 110 and determines an acceleration segment.

In the present embodiment, the acceleration segment determining portion 121 measures an acceleration based on a speed after elapse of two seconds from the time when the vehicle 300 starts moving, and determines an acceleration segment based on the acceleration. FIG. 5 is a diagram that illustrates a relation between a speed after elapse of two seconds from the time when the vehicle 300 starts moving and an acceleration segment. In the example of the diagram, a speed after elapse of two seconds from the time when the vehicle 300 starts moving is sorted into an acceleration segment 1 of extremely-low acceleration if it is less than 3 km/h, an acceleration segment 2 of low acceleration if it is equal to or more than 3 km/h and less than 5 km/h, an acceleration segment 3 of middle acceleration if it is equal to or more than 5 km/h and less than 8 km/h, or an acceleration segment 4 of abrupt acceleration if it is equal to or more than 8 km/h. It is noted that this segmentation is one example, and other segmentation or other criterion for determining may be adopted.

Thus, by determining an acceleration segment based on a speed after elapse of two seconds from the time when it starts moving, if an acceleration segment of the vehicle 300 is the acceleration segment 4 of abrupt acceleration, it is predicted that the speed largely increases in the future, and if it is the acceleration segment 1 of extremely-low acceleration, it is predicted that the low speed state continues for a moment, for example.

As described above, under condition that the vehicle running warning sound is emitted during a period from a stopped state to the speed of 20 km/h, it is predicted that it takes a short time to reach the speed of 20 km/h which is the condition that the vehicle running warning sound stops, in the acceleration segment 4 of abrupt acceleration. In addition, it is predicted that it takes a longer time to reach the speed of 20 km/h as shifting into the acceleration segment 3 of middle acceleration, the acceleration segment 2 of low acceleration, and the acceleration segment 1 of extremely-low acceleration in this order. Thus, it is desirable to change a pitch of the warning sound according to time to reach the speed of 20 km/h.

The variable sound source frequency setting portion 122 sets a peak frequency fc of a sound source signal output from the variable sound source signal generator 140 based on the acceleration segment determined by the acceleration segment determining portion 121 and the speed of vehicle obtained by the vehicle speed information obtaining unit 110.

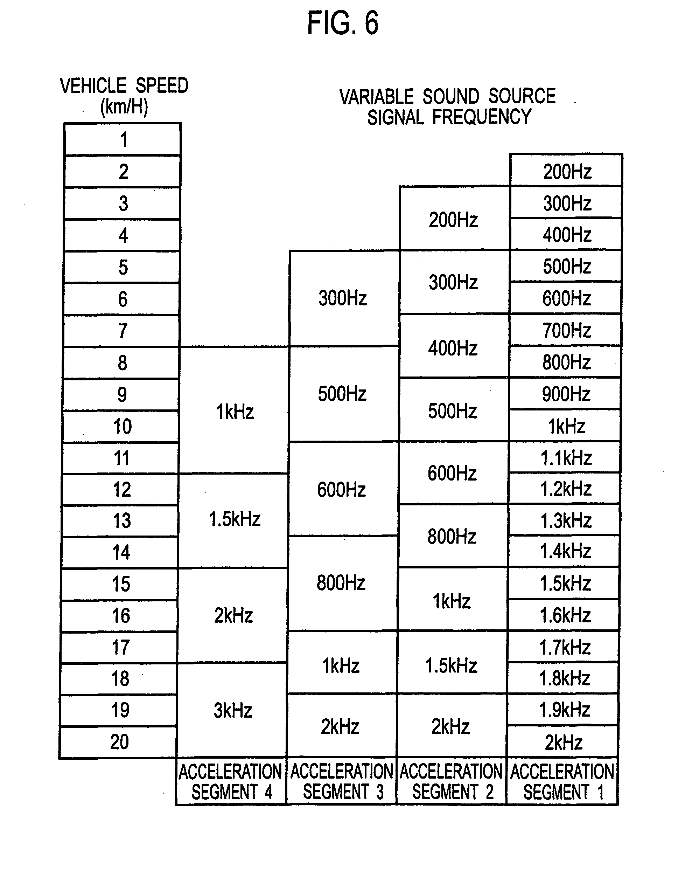

For example, the variable sound source frequency setting portion 122 sets a peak frequency fc of a sound source signal which the variable sound source signal generator 140 will output, according to a relation shown in FIG. 6 so as to set depending on each acceleration segment a frequency in which a pedestrian senses acceleration feel to easily recognize a running state of the vehicle 300.

In the example of the diagram, in the acceleration segment 4 of abrupt acceleration, since it is necessary to promptly warn the approach, the peak frequency fc of the variable sound source signal is set so as to increase in four steps with a wide variation width (1 kHz, 1.5 kHz, 2 kHz and 3 kHz) until reaching the speed of 20 km/h. By setting a high frequency higher, it is possible to hear a sound like a siren, which gives a pedestrian a feeling of moderate tension aurally.

In the acceleration segment 3 of middle acceleration, the peak frequency fc of the variable sound source signal is set so as to increase in six steps (300 Hz, 500 Hz, 600 Hz, 800 Hz, 1 kHz and 2 kHz) until reaching the speed of 20 km/h.

In the acceleration segment 2 of low acceleration, the peak frequency fc of the variable sound source signal is set so as to increase in nine steps (200 Hz, 300 Hz, 400 Hz, 500 Hz, 600 Hz, 800 Hz, 1 kHz, 1.5 kHz and 2 kHz) until reaching the speed of 20 km/h.

In the acceleration segment 1 of extremely-low acceleration, the peak frequency fc of the variable sound source signal is set so as to increase little by little in nineteen steps (200 Hz, 300 Hz, 400 Hz, 500 Hz, 600 Hz, 700 Hz 800 Hz, 900 Hz, 1 kHz, 1.1 kHz, 1.2 kHz, 1.3 kHz, 1.4 kHz, 1.5 kHz, 1.6 kHz, 1.7 kHz, 1.8 kHz, 1.9 kHz and 2 kHz) until reaching the speed of 20 km/h.

Thus, in the present embodiment, the number of variation steps of the peak frequency of the variable sound source signal is changed by each acceleration segment. Specifically, when the acceleration is large, the number of variation steps is decreased because a variation time of speed is short. When the acceleration is small, the number of variation steps is increased because a variation time of speed is long. The peak frequency is increased to 3 kHz in the acceleration segment 4 of abrupt acceleration. In contrast, the peak frequency is increased to 2 kHz in other acceleration segments. In the result, acceleration feel is further emphasized as an acceleration increases.

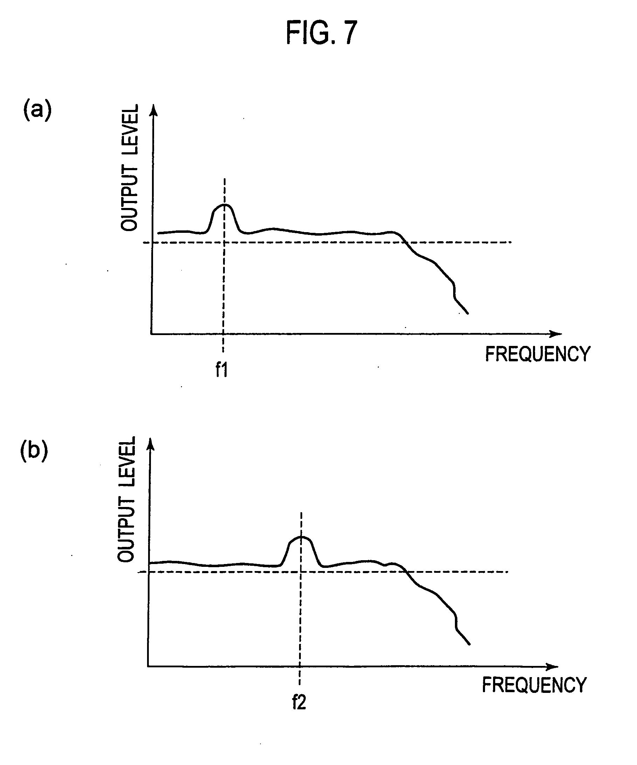

The sound source signal adder 150 adds the variable sound source signal from the variable sound source signal generator 140 to the fixed sound source signal from the fixed sound source signal generator 130, and then outputs it to the speaker 200 as a sound signal. FIG. 7 is a diagram that illustrates a frequency distribution of a signal resulting from adding the variable sound source signal to the fixed sound source signal. FIG. 7 (a) shows a frequency distribution when a peak frequency is "f1". FIG. 7 (b) shows a frequency distribution when a peak frequency is "f2".

Since an output level (sound pressure) of a peak frequency "fc" is larger than an output level (sound pressure) of the fixed sound source signal from the fixed sound source signal generator 130, an added sound is heard as a sound in which a specific frequency corresponding to the peak frequency "fc" is emphasized in a simulated engine sound. Namely, a tonal component in which the simulated engine sound is emphasized becomes higher as the speed of the vehicle 300 increases. In the present embodiment, the output sound signal is generated by simply adding the variable sound source signal to the fixed sound source signal. This simplifies a configuration, which increases a possibility of design.

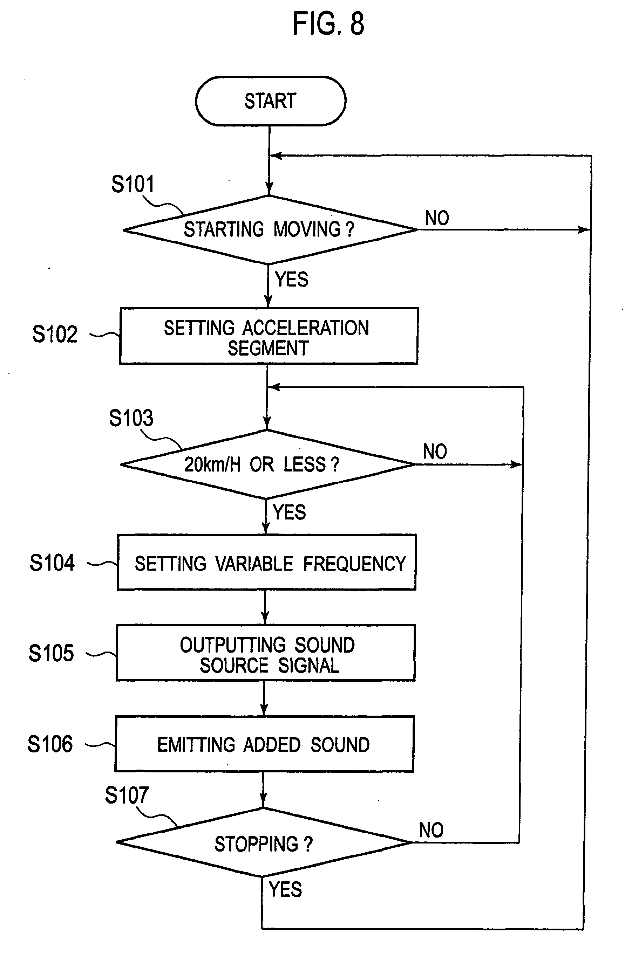

Next, an operation of the vehicle running warning device 100 in the present embodiment will be described with reference to the flowchart of FIG. 8. The sound-emitting controller 120 of the vehicle running warning device 100 continually receives vehicle speed information of the vehicle 300 obtained by the vehicle speed information obtaining unit 110, and determines whether or not the vehicle 300 starts moving from a stopped state which is an initial state (S101). It is noted that a sound based on the fixed sound source signal from the fixed sound source signal generator 130 may be output from the speaker 200 so as to simulate an idling sound of an engine vehicle even in the stopped state. At this time, a sound volume of the simulated idling sound may be reduced.

If the vehicle 300 starts moving (S101: Yes), the acceleration segment determining portion 121 of the sound-emitting controller 120 sets an acceleration segment based on a speed of the vehicle 300 after elapse of two seconds from the time of starting moving (S102). The acceleration segment is sorted into any one of "acceleration segment 1", "acceleration segment 2", "acceleration segment 3" and "acceleration segment 4" in ascending order of acceleration according to the rule shown in FIG. 5.

When the acceleration segment is set, the variable sound source frequency setting portion 122 determines whether or not the speed of the vehicle 300 obtained by the vehicle speed information obtaining portion 110 is equal to or less than 20 km/h (S103). If the speed is not equal to or less than 20 km/h (S103: No), a sound-emitting process is not carried out until the speed becomes equal to or less than 20 km/h because it is not necessary to emit a warning sound. Namely, an output of the fixed sound source signal of the fixed sound source signal generator 130 and an output of the variable sound source signal of the variable sound source signal generator 140 are stopped.

If the speed is equal to or less than 20 km/h (S103: Yes), a frequency corresponding to the speed is set to the variable sound source signal generator 140 according to the rule shown in FIG. 6 in the set acceleration segment (S104), and then the variable sound source signal generator 140 is caused to output the variable sound source signal. It is noted that the variable sound source signal is not output during two seconds from the time of starting moving, or the variable sound source signal having a previously set frequency is output. Further, the fixed sound source signal generator 130 is caused to output the fixed sound source signal (S105).

Then, the sound source signal adder 150 adds the variable sound source signal from the variable sound source signal generator 140 to the fixed sound source signal from the fixed sound source signal generator 130, and then outputs it to the speaker 200 as a sound signal. Thereby, a warning sound in which the variable sound source signal is overlapped with the fixed sound source signal is emitted (S106).

A series of processes after the determination process as to whether the speed is equal to or less than 20 km/h (S103) is repeated until the vehicle 300 stops (S107). Namely, after the speed of the vehicle 300 exceeds 20 km/h, if the speed is again reduced to 20 km/h or less, a warning sound is emitted according to an acceleration segment at the time of starting moving and a vehicle speed. It is noted that an acceleration segment may be separately determined according to a rule other than FIG. 5 at a time of reducing the speed, and a warning sound may be emitted using a variable sound source signal having a frequency set based on the separately determined acceleration segment and the speed of the vehicle 300.

If the vehicle 300 stops (S107: Yes), it returns to the process (S101), resets an acceleration segment and carries out the determination of starting moving again. If the starting moving is determined (S101: Yes), a new acceleration segment is set (S102).

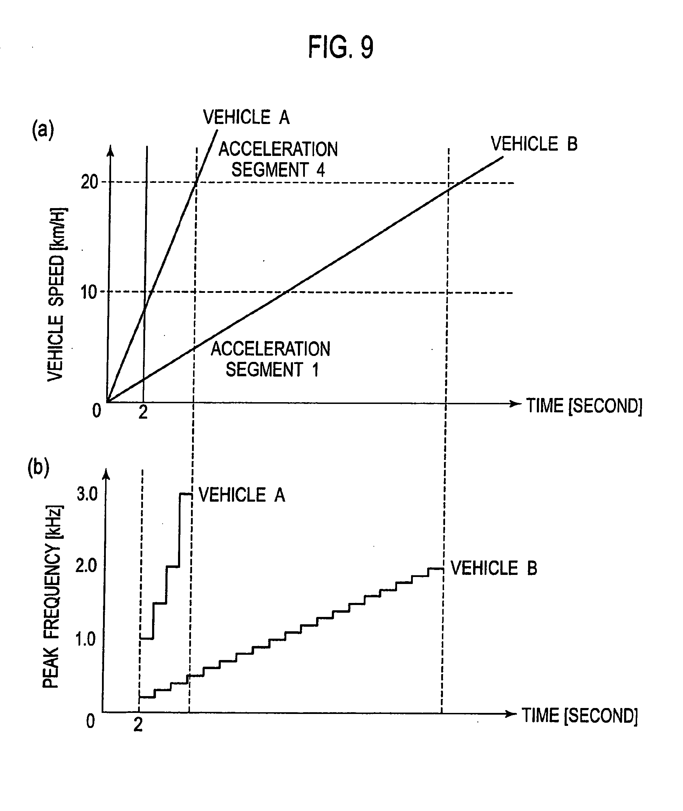

By carrying out the above-described operation, when the vehicle 300 performs a speed change as shown in FIG. 9(a) for example, a peak frequency of the variable frequency sound source signal changes as FIG. 9(b). Namely, regarding a vehicle "A" in the acceleration segment 4 of abrupt acceleration, a peak frequency increases in four steps with a wide variation width while it takes a short time. Regarding a vehicle "B" in the acceleration segment 1 of extremely-low acceleration, a peak frequency increases in nineteen steps with a small variation width while it takes a long time.

In the result, it is rapidly changed in a large amount of frequency change, for example into a sound close enough to a siren, as an acceleration increases. This further emphasizes acceleration feel, which gives a pedestrian a feeling of moderate tension with respect to the approach of the vehicle 300. Also, even in the case of the extremely-low acceleration, since the vehicle 300 runs while a frequency is gradually changed in addition to emitting a warning sound, a pedestrian's attention can be invited.

Thus, according to the vehicle running warning device 100, since the vehicle running warning sound with the frequency characteristic in consideration of the speed and acceleration of the vehicle 300 is emitted, it is possible to provide meaningful information allowing a pedestrian to easily sense a danger.

### [Reference Signs List]

- 100: vehicle running warning device
- 110: vehicle speed information obtaining unit
- 120: sound-emitting controller
- 121: acceleration segment determining portion
- 122: variable sound source frequency setting portion
- 130: fixed sound source signal generator
- 140: variable sound source signal generator
- 150: sound source signal adder
- 200: speaker
- 300: vehicle

## Claims

1. A vehicle running warning device comprising:
a fixed sound source signal generator configured to generate a fixed sound source signal with a certain frequency distribution;
a variable sound source signal generator configured to generate a variable sound source signal with a frequency distribution having a peak frequency corresponding to each set;
a sound-emitting controller configured to determine an acceleration segment of a vehicle based on vehicle speed information obtained from the vehicle to which the controller is mounted, and set the peak frequency based on the determined acceleration segment and the latest vehicle speed information; and
a sound source signal adder configured to add to the fixed sound source signal a variable sound source signal in which the peak frequency is set, and output.

2. The vehicle running warning device according to claim 1, wherein the sound-emitting controller determines an acceleration segment of the vehicle based on a vehicle speed after elapse of a predetermined time from the time when the vehicle starts moving.

3. The vehicle running warning device according to claim 1 or 2, the sound-emitting controller sets the peak frequency according to a rule which is defined such that as a vehicle speed becomes higher, the peak frequency increases step-by-step by each acceleration segment until a certain reference speed.

4. The vehicle running warning device according to claim 3, wherein the rule is defined such that as an acceleration segment has a higher acceleration, the number of steps of the peak frequency decreases.

5. The vehicle running warning device according to any one of claims 1 to 4, wherein an output level of a peak frequency of the variable sound source signal is larger than an output level of the fixed sound source signal.

6. The vehicle running warning device according to any one of claims 1 to 5, wherein the sound-emitting controller determines an acceleration segment every time when the vehicle starts moving after stopping.
